# FASCICULE DE BREVET EUROPEEN

(11) **EP 3 271 636 B1**
(45) Date de publication et mention de la délivrance du brevet: **14.04.2021**
(21) Numéro de dépôt: 16712953.5
(22) Date de dépôt: 24.02.2016
(51) Int. Cl.: F17C 5/00, F17C 5/06, F17C 7/00, F17C 13/02

(54) **PROCÉDÉ ET DISPOSITIF DE REMPLISSAGE DE RÉSERVOIRS**
VERFAHREN UND VORRICHTUNG ZUR BEFÜLLUNG VON BEHÄLTERN
METHOD AND DEVICE FOR FILLING TANKS

(30) Priorité: 17.03.2015 FR 1552188
(43) Date de publication de la demande: 24.01.2018
(73) Titulaire: L'Air Liquide Société Anonyme pour l'Etude et l'Exploitation des Procédés Georges Claude, 75007 Paris (FR)
(72) Inventeur: ROBERGE, Guillaume, 38300 Maubec (FR); DE REALS, Guy, 78210 Saint Cyr l'Ecole (FR); VERGHADE, Jean-Marie, 38410 Saint Martin D'uriage (FR)
(74) Mandataire: Air Liquide
(86) Numéro de dépôt international: PCT/FR2016/050425
(87) Numéro de publication internationale: WO 2016/146913

(56) Documents cités:
- FR-A1- 2 928 716
- US-A1- 2014 263 420

## Description

La présente invention concerne un procédé et un dispositif de remplissage de réservoirs avec du gaz sous pression.

L'invention concerne plus particulièrement un procédé de remplissage de réservoirs avec du gaz sous pression, notamment de l'hydrogène sous pression, via une station de remplissage comprenant plusieurs récipients de stockage de gaz sous pression et un circuit fluidique de transfert du gaz depuis les récipients vers les réservoirs par équilibrage(s) de pression, le circuit comprenant une première extrémité à laquelle sont reliés en parallèle les récipients et une seconde extrémité munie d'une conduite de transfert destinée à être raccordée de façon amovible au(x) réservoir(s) à remplir, le circuit comprenant, disposés en série entre la première extrémité et la seconde extrémité, une première vanne d'isolation, un organe de régulation de débit ou de pression, et une seconde vanne d'isolation, le procédé comprenant un remplissage d'un premier réservoir.

L'invention s'applique avantageusement au remplissage rapide (quelques minutes) de réservoirs d'hydrogène sous pression (entre 200 et 1000 bar par exemple). L'invention s'applique notamment au remplissage de réservoirs de carburant de véhicules.

Lors du remplissage d'un réservoir d'hydrogène de gaz sous pression, la compression du gaz dans le réservoir produit un échauffement pouvant dépasser les limites d'utilisation des matériaux du réservoir.

Pour optimiser ces remplissages une technique connue consiste à remplir les réservoirs « par cascade », c'est-à-dire en réalisant des équilibrages de pression successifs entre le réservoir à remplir et des récipients de gaz sous pression à des pressions croissantes. Ce remplissage peut également être complété et/ou assisté par un compresseur. Le gaz peut être également refroidi lors du remplissage.

Les documents FR2928716A1 et FR2919375A1 décrivent deux exemples non limitatifs de tels procédés de remplissage.

Le document WO2011/049466A1 décrit une station de remplissage utilisant du gaz du circuit pour effectuer des tests d'étanchéité.

Il existe un intérêt continu pour améliorer l'efficacité et les coûts de telles stations de remplissages.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que, à la fin du remplissage du premier réservoir et avant le remplissage d'un second réservoir, les première et seconde vannes d'isolation sont fermées pour emprisonner une réserve de gaz sous pression dans le circuit entre ces deux vannes et en ce que, la réserve de gaz est utilisée pour re-remplir l'au au moins des récipients.

Cette utilisation pour re-remplir un récipient comprend notamment un transfert de ce gaz de la réserve dans au moins un récipient c'est-à-dire que la ou les vannes appropriées du circuit sont ouvertes, notamment la première vanne.

Cette utilisation du gaz pour re-remplir au moins un récipient est réalisée de préférence après détermination (mesure par exemple) de la pression dans le circuit (notamment entre ces deux vannes) et/ou dans le ou les récipient(s).

L'invention présente propose un agencement et/ou une utilisation des dispositifs de remplissage permettant d'améliorer l'efficacité des remplissages.

En effet, à l'issu d'un remplissage terminé, au lieu d'évacuer le gaz présent dans les lignes du circuit de remplissage (rejet à l'atmosphère par exemple), l'invention conserve ce gaz sous pression pour le renvoyer dans les récipients source.

Par ailleurs, des modes de réalisation de l'invention peuvent comporter l'une ou plusieurs des caractéristiques suivantes :
- la réserve de gaz est utilisée pour remplir l'au au moins des récipients par équilibrage de pression,
- la réserve de gaz est utilisée pour remplir plusieurs récipients par équilibrage de pression successifs, les récipients étant remplis successivement par ordre de pression décroissante c'est-à-dire en équilibrant la réserve de gaz d'abord avec le récipient ayant la pression la plus élevée inférieure à la pression de la réserve de gaz, puis en équilibrant la réserve de gaz ensuite avec un autre récipient ayant une pression moindre et moins élevée que la pression de la réserve de gaz, en finissant par un équilibrage de pression entre la réserve de gaz et le récipient ayant la pression la moins élevée et inférieure à la pression de la réserve de gaz,
- le procédé comporte des mesures de pression au sein de la réserve de gaz et au sein des récipients, les équilibrages de pression successifs sont réalisés en réponse auxdites mesures de pression,
- le gaz emprisonné entre les deux vannes d'isolation est dans les conditions de température et de pression correspondant à la dernière phase de remplissage du premier réservoir,
- le gaz emprisonné entre les deux vannes d'isolation a une pression comprise entre 200 et 1000 bar et de préférence comprise entre 400 et 700 bar et une température comprise entre -40°C et +85°C (selon par exemple la vitesse de soutirage du gaz, le nombre de réservoirs remplis, la température ambiante...) et de préférence comprise entre la température ambiante augmentée de 20°C et la température ambiante moins 20°C,
- la première vanne d'isolation est disposée à proximité de la première extrémité du circuit, c'est-à-dire que la première vanne d'isolation est plus proche de la première extrémité du circuit que de la seconde extrémité du circuit,
- la seconde vanne d'isolation est disposée a proximité de la seconde extrémité du circuit, c'est-à-dire que la seconde vanne d'isolation est plus proche de la seconde extrémité du circuit que de la première extrémité du circuit,
- le volume du circuit situé entre les première et seconde vannes d'isolation est compris entre trois et cinquante litres,
- la longueur du circuit entre les première et seconde vannes d'isolation est comprise entre un mètre et cinq-cents mètres et de préférence comprise entre un et cent mètres,
- au moins entre les première et seconde vannes d'isolation le circuit comprend une ou des conduites comprenant une isolation thermique.

L'invention concerne également un dispositif de remplissage de réservoirs avec du gaz sous pression, notamment de l'hydrogène sous pression, comprenant une station de remplissage comprenant plusieurs récipients de stockage de gaz sous pression reliés en parallèle, via un ensemble de vannes respectives, à la première extrémité d'un circuit fluidique de transfert du gaz depuis les récipients vers les réservoirs, le circuit comprenant une seconde extrémité munie d'une conduite de transfert destinée à être raccordée de façon amovible au(x) réservoir(s) à remplir, le circuit comprenant, disposés en série entre la première extrémité et la seconde extrémité, une première vanne d'isolation, un organe de régulation de débit ou de pression, et une seconde vanne d'isolation, le circuit comprenant un ensemble de capteur(s) de mesure de la pression dans les récipients et dans le circuit, le dispositif comprenant un organe électronique de stockage, d'acquisition et de traitement de données reliés aux capteurs et aux vannes pour piloter l'ouverture des vannes en fonction des mesures de pression des capteurs commander les vannes afin de réaliser un remplissage de réservoir(s) par des équilibrages de pression successif avec les récipients, caractérisé en ce que l'organe électronique de stockage, d'acquisition et de traitement de données reliés est configuré, à la fin du remplissage d'un premier réservoir et avant le remplissage d'un second réservoir, pour commander la fermeture des première et seconde vannes d'isolation pour emprisonner une réserve de gaz sous pression dans le circuit entre ces deux vannes et pour utiliser cette réserve de gaz pour re-remplir l'au au moins des récipients.

Selon d'autres particularités possibles, l'organe électronique de stockage, d'acquisition et de traitement de données reliés est configuré pour re-remplir plusieurs récipients avec la réserve de gaz par des équilibrage de pression successifs selon un ordre de pression décroissant, c'est-à-dire en équilibrant la réserve de gaz d'abord avec le récipient ayant la pression la plus élevée inférieure à la pression de la réserve de gaz, puis en équilibrant la réserve de gaz ensuite avec un autre récipient ayant une pression moindre mais plus élevée que la pression de la réserve de gaz, en finissant par un équilibrage de pression entre la réserve de gaz et le récipient ayant la pression la moins élevée et inférieure à la pression de la réserve de gaz.

L'invention peut concerner également tout dispositif ou procédé alternatif comprenant toute combinaison des caractéristiques ci-dessus ou ci-dessous, en restant dans le cadre des revendications.

D'autres particularités et avantages apparaîtront à la lecture de la description ci-après, faite en référence à la figure unique qui représente, de façon schématique et partielle, un exemple de station de remplissage de gaz pouvant mettre en œuvre l'invention.

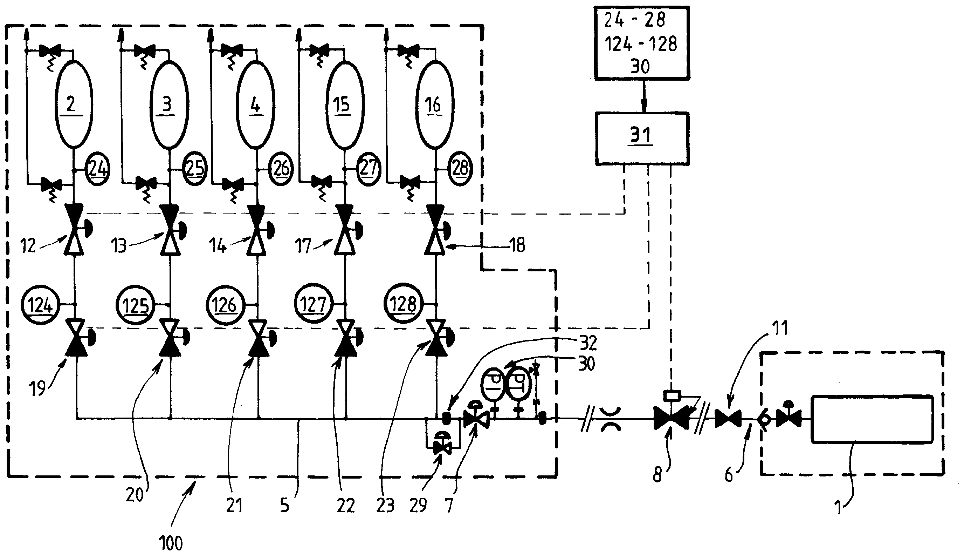

Le dispositif de remplissage de réservoirs 1 avec du gaz sous pression, notamment de l'hydrogène sous pression illustré à la figure 1 comprend plusieurs récipients 2, 3, 4, 15, 16 de stockage de gaz sous pression reliés en parallèle, via un ensemble de vannes respectives 12, 13, 14, 17, 18, 19, 20, 21, 22, 23, à la première extrémité d'un circuit 5 fluidique de transfert du gaz depuis les récipients vers les réservoirs 1 à remplir. Les récipients 2, 3, 4, 15, 16 stockent du gaz sous pression (hydrogène par exemple) à des pressions différentes déterminées par exemple entre 100 et 1000 bar.

Le circuit 5 comprend en particulier au moins une conduite fluidique.

Dans l'exemple représenté, cinq récipients 2, 3, 4, 15, 16 sont raccordés en parallèle à la première extrémité du circuit 5 de remplissage. Par exemple, chaque récipient 2, 3, 4, 15, 16 est raccordé à la première extrémité du circuit 5 via deux vannes respectives disposées en série.

Classiquement, chaque récipient 2, 3, 4, 15, 16 peut être muni d'un capteur 124, 125, 126, 127, 128 respectif de mesure de la pression au sein du récipient.

Comme représenté, chaque capteur de pression 124 à 128 peut être situé sur le circuit 5 entre les deux vannes en séries reliées à chaque récipient.

Les deux vannes en série à la sortie de chaque récipient 2, 3, 4, 15, 16 peuvent être des vannes automatiques utilisées de façon « tête-bêche ». Ces vannes peuvent être du type à commande par électro-aimant (par exemple vannes passantes dans le sens aval-amont, si la pression aval est supérieure à la pression amont). Dans le cas par exemple où l'une des vanne est étanche dans les deux sens de circulation, l'une des deux vannes en série peut être omise.

De même, chaque récipient 2, 3, 4, 15, 16 peut comporter un capteur de température respectif 24 à 28 de mesure de la température du récipient et/ou du gaz dans le récipient. De plus, classiquement également, chaque récipient 2, 3, 4, 15, 16 peut comporter un dispositif de sécurité pour évacuer le contenu en cas de surpression ou de surchauffe selon le type de bouteille (clapet d'évacuation sensible à la pression et/ou à la température).

En aval (vers la seconde extrémité), le circuit 5 peut comporter par exemple : une première vanne 7 d'isolation, des capteurs 30 de pression (et éventuellement de température), un orifice calibré, une vanne 8 de régulation de pression et/ou de débit et une seconde vanne 11 d'isolation.

L'ensemble de capteur(s) peut notamment mesurer de façon directe ou indirecte la pression dans le circuit entre les premières 7 et seconde 11 vannes.

En aval, le circuit peut comporter un flexible muni d'un raccord destiné à être raccorder de façon étanche au réservoir 1 à remplir.

Le circuit 5 peut comprendre un organe 31 électronique de commande de stockage, d'acquisition et de traitement de données reliés aux capteurs et aux vannes pour piloter l'ouverture des vannes en fonction des mesures de pression des capteurs.

L'organe 31 électronique peut comprendre un calculateur, un microprocesseur, un ordinateur ou tout logique électronique appropriée.

Classiquement l'organe 31 de commande est configuré (programmé ou programmable) pour pouvoir réaliser un remplissage de réservoir(s) 1 par des équilibrages de pression successif avec les récipients 2, 3, 4, 15, 16 (remplissage de type « cascade »).

Selon une particularité avantageuse, l'organe 31 de commande est configuré également, à la fin du remplissage d'un premier réservoir 1 et avant le remplissage d'un second réservoir suivant, pour commander la fermeture des première et seconde vannes d'isolation 7, 11 pour emprisonner une réserve de gaz sous pression dans le circuit 5 entre ces deux vannes 7, 11 et pour utiliser cette réserve de gaz pour renvoyer ce gaz dans le ou les récipients 2, 3, 4, 15, 16.

C'est-à-dire que le gaz résiduel du circuit qui est aux conditions (pression notamment) de la dernière phase de remplissage (dernier équilibrage de pression) peut être utilisé pour remplir le ou les récipients 2, 3, 4, 15, 16 par équilibrage de pression. Le gaz de la réserve est emprisonné en fin de remplissage, par exemple aux conditions des derniers instants ou secondes de remplissage.

De préférence, la réserve de gaz est utilisée pour remplir plusieurs récipients 2, 3, 4, 15, 16 par des équilibrages de pression successifs. Les récipients 2, 3, 4, 15, 16 sont par exemple remplis successivement par ordre de pression décroissante, c'est-à-dire en équilibrant la réserve de gaz d'abord avec le récipient 2, 3, 4, 15, 16 ayant la pression la plus élevée inférieure à la pression de la réserve de gaz, puis en équilibrant la réserve de gaz ensuite avec un autre récipient ayant une pression moindre et moins élevée que la pression de la réserve de gaz, etc... en finissant par un équilibrage de pression entre la réserve de gaz et le récipient ayant la pression la moins élevée et inférieure à la pression de la réserve de gaz. Lorsqu'il n'y a que deux récipients, le remplissage se termine à l'issue de l'équilibrage de pression entre la réserve et le second récipient (le dernier ayant une pression moins élevée et inférieure à la pression de la réserve).

Les équilibrages de pression successifs sont réalisés par exemple automatiquement en réponse auxdites mesures de pression 30, 124 à 128 au sein de la réserve de gaz et au sein des récipients 2, 3, 4, 15, 16.

En fonction des caractéristiques de la station, le gaz emprisonné dans le circuit peut avoir une pression comprise entre 200 et 1000 bar et de préférence comprise entre 400 et 700 bar et une température comprise entre moins 40°C et plus 85°C (selon par exemple la vitesse de soutirage du gaz, le nombre de réservoirs remplis, la température ambiante...) et de préférence comprise entre la température ambiante augmentée de 20°C et la température ambiante moins 20°C.

Le volume du circuit situé entre les première 7 et seconde 11 vannes d'isolation peut être compris entre trois et cinquante litres. Par exemple, la longueur du circuit 5 (conduite(s) entre les première 7 et seconde 11 vannes d'isolation) peut être comprise entre un mètre et plusieurs centaines de mètres et de préférence comprise entre un et cent mètres.

Tout en étant de structure simple et peu coûteuse, l'invention permet d'augmenter le taux d'utilisation des récipients de gaz sous pression.

En effet, cette solution ne nécessite aucune modification structurelle des stations de l'art antérieur (vannes et les capteurs de pression sont déjà présents sur l'installation). Seule une modification de la programmation ou de l'utilisation de la station est nécessaire (écoulement du gaz en sens inverse).

Comme représenté, une vanne automatique 29 supplémentaire peut être disposée dans une dérivation en parallèle d'un clapet 32 de pression résiduelle dans le circuit 5, pour permettre la « cascade inverse » et pour mettre à la pression atmosphérique les récipients en cas de maintenance.

De plus, le raccord de connexion de chaque récipient doit être passant dans les deux sens pour le remplissage et le soutirage.

Les inventeurs mis en évidence que les gains d'efficacité sont significatifs (jusqu'à 20% de plus du taux d'utilisation du gaz des récipients).

En effet, cette méthode permet d'améliorer le taux d'utilisation des récipients, c'est-à-dire, d'augmenter la quantité de gaz transférée vers les réservoirs véhicules, en permettant d'augmenter le nombre de remplissages réellement pleins (c'est-à-dire à un taux de remplissage du véhicule supérieur à 95% par exemple).

De plus l'invention permet de réduire les changements de récipients source (commande d'un ensemble de récipients pleins). En effet, l'invention permet d'éviter des changements prématurés de récipients en utilisant ces derniers de façon plus complète.

Ceci permet de diminuer le coût de l'ensemble.

L'invention peut s'appliquer à toute station de remplissage fixe ou mobile et en particulier à toute station utilisant des remorques mobiles de récipients sous pression (pression comprises entre 200 bar et 700bar par exemple pour des « trailer » multi compartiments).

Par exemple, l'ensemble entouré de pointillés sur la partie droite de la figure (récipients et vannes...) peut constituer l'alimentation en gaz, par exemple solidaire d'un semi-remorque mobile. L'entité entourée de pointillées sur la gauche de la figure peut être typiquement le réservoir mobile à remplir, par exemple solidaire d'un véhicule. Enfin, la partie entre ces deux entités (ligne avec organe de régulation 8 et orifice calibré le cas échéant...) peut être installée dans un entrepôt, par exemple pour former la partie relativement fixe de la station de remplissage.

La station peut comporter un compresseur utilisé dans les remplissages des réservoirs ou des récipients (pour suppléer ou compléter ces remplissages). En particulier, le gaz de la réserve peut servir de source de gaz pour le compresseur.

## Revendications

1. Procédé de remplissage de réservoirs (1) avec du gaz sous pression, notamment de l'hydrogène sous pression, via une station (100) de remplissage comprenant plusieurs récipients (2, 3, 4, 15, 16) de stockage de gaz sous pression et un circuit (5) fluidique de transfert du gaz depuis les récipients vers les réservoirs (1) par équilibrage(s) de pression, le circuit (5) comprenant une première extrémité à laquelle sont reliés en parallèle les récipients (2, 3, 4, 15, 16) et une seconde extrémité munie d'une conduite (6) de transfert destinée à être raccordée de façon amovible au(x) réservoir(s) (1) à remplir, le circuit (5) comprenant, disposés en série entre la première extrémité et la seconde extrémité, une première vanne (7) d'isolation, un organe (8) de régulation de débit ou de pression, et une seconde vanne (11) d'isolation, le procédé comprenant un remplissage d'un premier réservoir (1), caractérisé en que, à la fin du remplissage du premier réservoir (1) et avant le remplissage d'un second réservoir, les première (7) et seconde (11) vannes d'isolation sont fermées pour emprisonner une réserve de gaz sous pression dans le circuit (5) entre ces deux vannes (7, 11) et en ce que, la réserve de gaz est utilisée pour re-remplir l'un au moins des récipients (2, 3, 4, 15, 16).

2. Procédé selon la revendication 1, **caractérisé en ce que** la réserve de gaz est utilisée pour remplir l'un au moins des récipients (2, 3, 4, 15, 16) par équilibrage de pression.

3. Procédé selon la revendication 1 ou 2, **caractérisé en ce que** la réserve de gaz est utilisée pour remplir plusieurs récipients (2, 3, 4, 15, 16) par équilibrage de pression successifs, les récipients (2, 3, 4, 15, 16) étant remplis successivement par ordre de pression décroissante c'est-à-dire en équilibrant la réserve de gaz d'abord avec le récipient (2, 3, 4, 15, 16) ayant la pression la plus élevée inférieure à la pression de la réserve de gaz, puis en équilibrant la réserve de gaz ensuite avec un autre récipient ayant une pression moindre et moins élevée que la pression de la réserve de gaz, en finissant le remplissage par un équilibrage de pression entre la réserve de gaz et le récipient ayant la pression la moins élevée et inférieure à la pression de la réserve de gaz.

4. Procédé selon la revendication 3, **caractérisé en ce qu'**il comporte des mesures de pression (30, 124 à 128) au sein de la réserve de gaz et au sein des récipients (2, 3, 4, 15, 16) et **en ce que** les équilibrages de pression successifs sont réalisés en réponse auxdites mesures de pression.

5. Procédé selon l'une quelconque des revendications 1 à 4, **caractérisé en ce que** le gaz emprisonné entre les deux vannes (7, 11) d'isolation est dans les conditions de température et de pression correspondant à la dernière phase de remplissage du premier réservoir (1).

6. Procédé selon l'une quelconque des revendications 1 à 5, **caractérisé en ce que** le gaz emprisonné entre les deux vannes (7, 11) d'isolation a une pression comprise entre 200 et 1000 bar et de préférence comprise entre 400 et 700 bar et une température comprise entre -40°C et +85°C (selon par exemple la vitesse de soutirage du gaz, le nombre de réservoirs remplis, la température ambiante...) et de préférence comprise entre la température ambiante augmentée de 20°C et la température ambiante moins 20°C.

7. Procédé selon l'une quelconque des revendications 1 à 6, **caractérisé en ce que** la première vanne (7) d'isolation est disposée à proximité de la première extrémité du circuit (5), c'est-à-dire que la première vanne (7) d'isolation est plus proche de la première extrémité du circuit (5) que de la seconde extrémité du circuit (5).

8. Procédé selon l'une quelconque des revendications 1 à 7, **caractérisé en ce que** la seconde vanne (11) d'isolation est disposée a proximité de la seconde extrémité du circuit (5), c'est-à-dire que la seconde vanne (11) d'isolation est plus proche de la seconde extrémité du circuit (5) que de la première extrémité du circuit.

9. Procédé selon l'une quelconque des revendications 1 à 8, **caractérisé en ce que** le volume du circuit situé entre les premières (7) et seconde (11) vannes d'isolation est compris entre trois et cinquante litres.

10. Procédé selon l'une quelconque des revendications 1 à 9, **caractérisé en ce que** la longueur du circuit (5) entre les première (7) et seconde (11) vannes d'isolation est comprise entre un mètre et cinq-cents mètres et de préférence comprise entre un et cent mètres.

11. Dispositif de remplissage de réservoirs (1) avec du gaz sous pression, notamment de l'hydrogène sous pression, comprenant une station (100) de remplissage comprenant plusieurs récipients (2, 3, 4, 15, 16) de stockage de gaz sous pression reliés en parallèle, via un ensemble de vannes respectives (12, 13, 14, 17, 18, 19, 20, 21, 22, 23), à la première extrémité d'un circuit (5) fluidique de transfert du gaz depuis les récipients vers les réservoirs (1), le circuit (5) comprenant une seconde extrémité munie d'une conduite (6) de transfert destinée à être raccordée de façon amovible au(x) réservoir(s) (1) à remplir, le circuit (5) comprenant, disposés en série entre la première extrémité et la seconde extrémité, une première vanne (7) d'isolation, un organe (8) de régulation de débit ou de pression, et une seconde vanne (11) d'isolation, le circuit (5) comprenant un ensemble de capteur(s) (30, 124 à 128)) de mesure de la pression dans les récipients (2, 3, 4, 15, 16) et dans le circuit (5), le dispositif comprenant un organe (31) électronique de stockage, d'acquisition et de traitement de données reliés aux capteurs et aux vannes pour piloter l'ouverture des vannes en fonction des mesures de pression des capteurs commander les vannes afin de réaliser un remplissage de réservoir(s) (1) par des équilibrages de pression successif avec les récipients, **caractérisé en ce que** l'organe (31) électronique de stockage, d'acquisition et de traitement de données reliés est configuré, à la fin du remplissage d'un premier réservoir (1) et avant le remplissage d'un second réservoir, pour commander la fermeture des première et seconde vannes d'isolation (7, 11) pour emprisonner une réserve de gaz sous pression dans le circuit (5) entre ces deux vannes (7, 11) et pour utiliser cette réserve de gaz pour re-remplir l'un au moins des récipients (2, 3, 4, 15, 16).

12. Dispositif selon la revendication 11, **caractérisé en ce que** l'organe (31) électronique de stockage, d'acquisition et de traitement de données reliés est configuré pour re-remplir plusieurs récipients (2, 3, 4, 15, 16) avec la réserve de gaz par des équilibrage de pression successifs selon un ordre de pression décroissant, c'est-à-dire en équilibrant la réserve de gaz d'abord avec le récipient (2, 3, 4, 15, 16) ayant la pression la plus élevée inférieure à la pression de la réserve de gaz, puis en équilibrant la réserve de gaz ensuite avec un autre récipient ayant une pression moindre mais plus élevée que la pression de la réserve de gaz, en finissant par un équilibrage de pression entre la réserve de gaz et le récipient ayant la pression la moins élevée et inférieure à la pression de la réserve de gaz.

## Patentansprüche

1. Verfahren zur Befüllung von Behältern (1) mit Druckgas, insbesondere Druckwasserstoff, über eine Füllstation (100), die mehrere Speicherbehältnisse (2, 3, 4, 15, 16) für Druckgas und einen Fluidkreislauf (5) für den Gastransport aus den Behältnissen zu den Behältern (1) mittels Druckausgleichsvorgang bzw. Druckausgleichsvorgängen umfasst, wobei der Kreislauf (5) ein erstes Ende umfasst, mit dem die Behältnisse (2, 3, 4, 15, 16) parallelgeschaltet sind, und ein zweites Ende, das mit einer Transportleitung (6) versehen ist, die beweglich mit dem bzw. den zu füllenden Behälter(n) (1) verbunden werden soll, wobei der Kreislauf (5) in Reihe geschaltet zwischen dem ersten Ende und dem zweiten Ende ein erstes Absperrventil (7), ein Durchfluss- oder Druckregelorgan (8) und ein zweites Absperrventil (11) umfasst, wobei das Verfahren ein Befüllen eines ersten Behälters (1) umfasst, **dadurch gekennzeichnet, dass** am Ende des Befüllens des ersten Behälters (1) und vor dem Befüllen eines zweiten Behälters das erste (7) und zweite Absperrventil (11) geschlossen werden, damit eine Druckgasreserve im Kreislauf (5) zwischen diesen beiden Ventilen (7, 11) eingeschlossen ist, und dadurch, dass die Gasreserve zum erneuten Befüllen von mindestens einem der Behältnisse (2, 3, 4, 15, 16) verwendet wird.

2. Verfahren nach Anspruch 1, **dadurch gekennzeichnet, dass** die Gasreserve zum Befüllen von mindestens einem der Behältnisse (2, 3, 4, 15, 16) mittels Druckausgleiches verwendet wird.

3. Verfahren nach Anspruch 1 oder 2, **dadurch gekennzeichnet, dass** die Gasreserve zum Befüllen mehrerer Behältnisse (2, 3, 4, 15, 16) mittels aufeinanderfolgenden Druckausgleichsvorgängen verwendet wird, wobei die Behältnisse (2, 3, 4, 15, 16) nacheinander in sinkender Druckreihenfolge befüllt werden, also zuerst die Gasreserve mit dem Behältnis (2, 3, 4, 15, 16) ausgeglichen wird, das den höchsten Druck unter dem Druck der Gasreserve aufweist, dann die Gasreserve anschließend mit einem weiteren Behältnis ausgeglichen wird, das einen geringeren Druck und niedriger als der Druck der Gasreserve aufweist, und das Befüllen mittels Druckausgleich zwischen der Gasreserve und dem Behältnis abgeschlossen wird, das den geringsten Druck und unter dem Druck der Gasreserve aufweist.

4. Verfahren nach Anspruch 3, **dadurch gekennzeichnet, dass** es Druckmessungen (30, 124 bis 128) im Inneren der Gasreserve und im Inneren der Behältnisse (2, 3, 4, 15, 16) umfasst, und dadurch, dass die aufeinanderfolgenden Druckausgleichsvorgänge als Reaktion auf die Druckmessungen erfolgen.

5. Verfahren nach einem der Ansprüche 1 bis 4, **dadurch gekennzeichnet, dass** das zwischen den beiden Absperrventilen (7, 11) eingeschlossene Gas die Temperatur- und Druckbedingungen aufweist, die der letzten Füllphase des ersten Behälters (1) entsprechen.

6. Verfahren nach einem der Ansprüche 1 bis 5, **dadurch gekennzeichnet, dass** das zwischen den beiden Absperrventilen (7, 11) eingeschlossene Gas einen Druck zwischen 200 und 1000 bar und vorzugsweise zwischen 400 und 700 bar und eine Temperatur zwischen -40°C und +85°C (je nach beispielsweise Gasabzugsgeschwindigkeit, Anzahl befüllter Behälter, Umgebungstemperatur...) und vorzugsweise zwischen der Umgebungstemperatur plus 20°C und der Umgebungstemperatur minus 20°C aufweist.

7. Verfahren nach einem der Ansprüche 1 bis 6, **dadurch gekennzeichnet, dass** das erste Absperrventil (7) in der Nähe des ersten Endes des Kreislaufs (5) angeordnet ist, sich das erste Absperrventil (7) also näher am ersten Ende des Kreislaufs (5) als am zweiten Ende des Kreislaufs (5) befindet.

8. Verfahren nach einem der Ansprüche 1 bis 7, **dadurch gekennzeichnet, dass** das zweite Absperrventil (11) in der Nähe des zweiten Endes des Kreislaufs (5) angeordnet ist, sich das zweite Absperrventil (11) also näher am zweiten Ende des Kreislaufs (5) als am ersten Ende des Kreislaufs befindet.

9. Verfahren nach einem der Ansprüche 1 bis 8, **dadurch gekennzeichnet, dass** das Volumen des Kreislaufs zwischen dem ersten (7) und zweiten Absperrventil (11) zwischen drei und fünfzig Litern beträgt.

10. Verfahren nach einem der Ansprüche 1 bis 9, **dadurch gekennzeichnet, dass** die Länge des Kreislaufs (5) zwischen dem ersten (7) und zweiten Absperrventil (11) zwischen einem und fünfhundert Metern und vorzugsweise zwischen einem und hundert Metern beträgt.

11. Vorrichtung zur Befüllung von Behältern (1) mit Druckgas, insbesondere Druckwasserstoff, die eine Füllstation (100) umfasst, die mehrere Speicherbehältnisse (2, 3, 4, 15, 16) für Druckgas umfasst, die über eine Anordnung von entsprechenden Ventilen (12, 13, 14, 17, 18, 19, 20, 21, 22, 23) mit dem ersten Ende eines Fluidkreislaufs (5) für den Gastransport aus den Behältnissen zu den Behältern (1) parallelgeschaltet sind, wobei der Kreislauf (5) ein zweites Ende umfasst, das mit einer Transportleitung (6) versehen ist, die beweglich mit dem bzw. den zu befüllenden Behälter(n) (1) verbunden werden soll, wobei der Kreislauf (5) in Reihe geschaltet zwischen dem ersten Ende und dem zweiten Ende ein erstes Absperrventil (7), ein Durchfluss- oder Druckregelorgan (8) und ein zweites Absperrventil (11) umfasst, wobei der Kreislauf (5) eine Anordnung aus (einem) Druckmesssensor(en) (30, 124 bis 128)) in den Behältnissen (2, 3, 4, 15, 16) und im Kreislauf (5) umfasst, wobei die Vorrichtung eine elektronische Einrichtung (31) zur Speicherung, Erfassung und Bearbeitung von mit den Sensoren und den Ventilen verbundenen Daten umfasst, um die Öffnung der Ventile in Abhängigkeit von den Druckmessungen der Sensoren anzusteuern, die Ventile zu steuern, damit eine Befüllung von (einem) Behälter(n) (1) mittels aufeinanderfolgenden Druckausgleichsvorgängen mit den Behältnissen erreicht wird, **dadurch gekennzeichnet, dass** die elektronische Einrichtung (31) zur Speicherung, Erfassung und Bearbeitung von verbundenen Daten so eingerichtet ist, dass sie am Ende des Befüllens eines ersten Behälters (1) und vor dem Befüllen eines zweiten Behälters das Schließen des ersten und zweiten Absperrventils (7, 11) steuert, damit im Kreislauf (5) zwischen diesen beiden Ventilen (7, 11) eine Gasreserve eingeschlossen wird und diese Gasreserve zum erneuten Befüllen von mindestens einem der Behältnisse (2, 3, 4, 15, 16) verwendet wird.

12. Vorrichtung nach Anspruch 11, **dadurch gekennzeichnet, dass** die elektronische Einrichtung (31) zur Speicherung, Erfassung und Bearbeitung von verbundenen Daten so eingerichtet ist, dass sie mehrere Behältnisse (2, 3, 4, 15, 16) mittels aufeinanderfolgenden Druckausgleichsvorgängen in sinkender Druckreihenfolge mit der Gasreserve erneut befüllt, also zuerst die Gasreserve mit dem Behältnis (2, 3, 4, 15, 16) ausgeglichen wird, das den höchsten Druck unter dem Druck der Gasreserve aufweist, dann die Gasreserve anschließend mit einem weiteren Behältnis ausgeglichen wird, das einen geringeren Druck, jedoch höher als der Druck der Gasreserve aufweist, und abschließend für einen Druckausgleich zwischen der Gasreserve und dem Behältnis gesorgt wird, das den geringsten Druck und unter dem Druck der Gasreserve aufweist.

## Claims

1. Method for filling tanks (1) with pressurized gas, notably pressurized hydrogen, via a filling station (100) comprising several containers (2, 3, 4, 15, 16) for storing gas under pressure and a fluidic circuit (5) for transferring the gas from the containers to the tanks (1) by pressure equalizing, the circuit (5) comprising a first end to which the containers (2, 3, 4, 15, 16) are connected in parallel, and a second end equipped with a transfer pipe (6) intended to be connected removably to the tank(s) (1) for filling, the circuit (5) comprising, arranged in series between the first end and the second end, a first isolation valve (7), a flow or pressure regulating member (8), and a second isolation valve (11), the method comprising a filling of a first tank (1), **characterized in that**, at the end of the filling of the first tank (1) and before the filling of a second tank, the first (7) and the second (11) isolation valves are closed in order to trap a reserve of gas under pressure in the circuit (5) between these two valves (7, 11), and **in that** the reserve of gas is used to re-fill at least one of the containers (2, 3, 4, 15, 16).

2. Method according to Claim 1, **characterized in that** the reserve of gas is used to fill at least one of the containers (2, 3, 4, 15, 16) by pressure equalizing.

3. Method according to Claim 1 or 2, **characterized in that** the reserve of gas is used to fill several containers (2, 3, 4, 15, 16) by successive pressure equalizing operations, the containers (2, 3, 4, 15, 16) being filled successively in decreasing pressure order, which means to say by equalizing the reserve of gas first of all with the container (2, 3, 4, 15, 16) having the highest pressure lower than the pressure of the reserve of gas, then by equalizing the reserve of gas next with another container having a lower pressure not as high as the pressure of the reserve of gas, finishing the filling by equalizing the pressure between the reserve of gas and the container having the least high pressure lower than the pressure of the reserve of gas.

4. Method according to Claim 3, **characterized in that** it comprises pressure measurements (30, 124 to 128) within the reserve of gas and within the containers (2, 3, 4, 15, 16), and **in that** the successive pressure equalizing operations are performed in response to said pressure measurements.

5. Method according to any one of Claims 1 to 4, **characterized in that** the gas trapped between the two isolation valves (7, 11) is under temperature and pressure conditions that correspond to the last phase of filling of the first tank (1).

6. Method according to any one of Claims 1 to 5, **characterized in that** the gas trapped between the two isolation valves (7, 11) has a pressure comprised between 200 and 1000 bar and preferably comprised between 400 and 700 bar and a temperature comprised between -40°C and +85°C (depending, for example, on the rate of withdrawal of the gas, the number of tanks filled, the ambient temperature, etc.) and preferably comprised between ambient temperature increased by 20°C and ambient temperature minus 20°C.

7. Method according to any one of Claims 1 to 6, **characterized in that** the first isolation valve (7) is positioned near the first end of the circuit (5), which means to say that the first isolation valve (7) is closer to the first end of the circuit (5) than to the second end of the circuit (5).

8. Method according to any one of Claims 1 to 7, **characterized in that** the second isolation valve (11) is positioned near the second end of the circuit (5), which means to say that the second isolation valve (11) is closer to the second end of the circuit (5) than to the first end of the circuit.

9. Method according to any one of Claims 1 to 8, **characterized in that** the volume of the circuit situated between the first (7) and second (11) isolation valves is comprised between three and fifty liters.

10. Method according to any one of Claims 1 to 9, **characterized in that** the length of the circuit (5) between the first (7) and second (11) isolation valves is comprised between one meter and five hundred meters and preferably comprised between one and one hundred meters.

11. Device for filling tanks (1) with pressurized gas, notably pressurized hydrogen, comprising a filling station (100) comprising several containers (2, 3, 4, 15, 16) for storing gas under pressure connected in parallel, via a set of respective valves (12, 13, 14, 17, 18, 19, 20, 21, 22, 23), to the first end of a fluidic circuit (5) for transferring the gas from the containers to the tanks (1), the circuit (5) comprising a second end equipped with a transfer pipe (6) intended to be connected removably to the tank(s) (1) for filling, the circuit (5) comprising, arranged in series between the first end and the second end, a first isolation valve (7), a flow or pressure regulating member (8), and a second isolation valve (11), the circuit (5) comprising a set of sensors (30, 124 to 128) for measuring the pressure in the containers (2, 3, 4, 15, 16) and in the circuit (5), the device comprising an electronic member (31) for the storage, acquisition and processing of data connected to the sensors and to the valves in order to govern the opening of the valves as a function of the pressure measurements from the sensors to control the valves so as to perform filling of (the) reservoir(s) (1) by successive equalizings of pressure with the containers, **characterized in that** the electronic member (31) for the storage, acquisition and processing of connected data is configured, at the end of the filling of a first tank (1) and before the filling of a second tank, to command the closing of the first and second isolation valves (7, 11) so as to trap a reserve of gas under pressure in the circuit (5) between these two valves (7, 11) and to use this reserve of gas to re-fill at least one of the containers (2, 3, 4, 15, 16) .

12. Device according to Claim 11, **characterized in that** the electronic member (31) for the storage, acquisition and processing of connected data is configured to re-fill several containers (2, 3, 4, 15, 16) with the reserve of gas by successive pressure equalizing operations in decreasing pressure order, namely by equalizing the reserve of gas first of all with the container (2, 3, 4, 15, 16) having the highest pressure lower than the pressure of the reserve of gas, then by equalizing the reserve of gas next with another container having a pressure that is lower but higher than the pressure of the reserve of gas, finishing by equalizing the pressure between the reserve of gas and the container having the least high pressure lower than the pressure of the reserve of gas.
